# EUROPÄISCHE PATENTSCHRIFT

(11) **EP 1 560 449 B1**
(45) Veröffentlichungstag und Bekanntmachung des Hinweises auf die Patenterteilung: **19.09.2007**
(21) Anmeldenummer: 05008743.6
(22) Anmeldetag: 02.12.2002
(51) Int. Cl.: H04Q 7/32

(54) **Speichern von und Zugreifen auf Konfigurationsdaten in einem Mobilgerät und einem Benutzermodul**
Storage of and access to configuration data in a mobile station and a user module
Mémorisation et access à des données de configuration dans un dispositif mobile et un module d'utilisateur

(30) Priorität: 04.12.2001 DE 10159398
(43) Veröffentlichungstag der Anmeldung: 03.08.2005
(62) Teilanmeldung aus: 02804213.3
(73) Patentinhaber: Giesecke & Devrient GmbH, 81677 München (DE)
(72) Erfinder: Kirsch, Jochen, Col. Del Valle Mexico, D.F. 03100 Mexico (MX); Klaassen, Ralf, 81825 München (DE)
(74) Vertreter: Klunker . Schmitt-Nilson . Hirsch

(56) Entgegenhaltungen:
- EP-A- 0 730 387
- EP-A- 0 891 111
- EP-A- 0 969 644
- US-A- 5 814 798

## Beschreibung

Die Erfindung betrifft allgemein das technische Gebiet des Speicherns von und Zugreifens auf Daten in Mobilgeräten sowie in Benutzermodulen für derartige Geräte. Ein bevorzugtes Einsatzgebiet der Erfindung sind Mobilgeräte, die dem Benutzer sowohl Telekommunikationsfunktionen (z.B. die Sprach- und/ oder Datenübertragung über ein Telekommunikationsnetz) als auch Anwendungsprogramme (z.B. einen Terminplaner oder einen Texteditor) bereitstellen. Derartige Mobilgeräte können insbesondere als leistungsfähige Mobiltelefone oder als persönliche digitale Assistenten (PDAs = personal digital assistants) ausgestaltet sein.

Die deutsche Offenlegungsschrift DE 197 24 901 A1 zeigt ein Mobiltelefon nach dem GSM-Standard (GSM = global system for mobile communication). Das Mobiltelefon weist eine Steuereinheit, einen Gerätespeicher und eine Schnittstelle für ein Teilnehmeridentifikationsmodul (SIM = subscriber identity module) auf. Über eine Leitungsverbindung mit einem Computer können Nutzdaten, z.B. Adressenlisten oder Umsatzdaten oder Preislisten, in den Gerätespeicher geladen werden. Ferner ist die Möglichkeit vorgesehen, über die Leitungsverbindung nicht näher spezifizierte Programme in den Gerätespeicher zu laden und später durch das Mobiltelefon ausführen zu lassen. Die Datenübertragung kann integritätsgesichert oder verschlüsselt erfolgen.

Aus der europäischen Offenlegungsschrift EP 0 730 387 A2 ist ein Mobiltelefon bekannt, welches unter mehreren Rufnummern erreichbar ist. Den einzelnen Rufnummern, die in einem "Number Assignment Modul" gespeichert sind, sind unterschiedliche Telefonbücher und/oder Kurzwahllisten zugeordnet.

Aus dem US-Patent US-PS 5,814,798 ist die Verwendung eines tragbaren Datenträgers zum Speichern von Präferenzen für beispielsweise ein Mobiltelefon bekannt. Diese Präferenzen werden beispielsweise zur Einstellung von Farbe, Helligkeit und Kontrast oder eines besonderen Zeichensatzes usw. verwendet.

In der Regel wird beim Einschalten eines GSM-Mobiltelefons eine Berechtigungsabfrage durchgeführt, bei der der Benutzer eine persönliche Geheimzahl (PIN = personal identification number) eingeben muss. Die vollständige Benutzeroberfläche einschließlich der Zugriffsmöglichkeit auf die in dem Mobiltelefon gespeicherten Nutzdaten wird nur bei korrekter Eingabe der Geheimzahl freigegeben. Die meist vertraulichen Nutzdaten sind damit in gewissem Umfang gesichert. Es besteht jedoch das Problem, dass diese Sicherung mit hinreichender krimineller Energie umgangen werden kann. So können beispielsweise mittels geeigneter Geräte Speicherbausteine des Mobiltelefons unmittelbar auf Hardwareebene ausgelesen werden.

Die Speicherung von Nutzdaten im Mobilgerät ist insbesondere dann sinnvoll, wenn das Mobilgerät auch zum Ausführen von Anwendungsprogrammen zur Verarbeitung dieser Nutzdaten eingerichtet ist. Diese Funktionalität ist heute schon bei leistungsfähigen GSM-Mobiltelefonen sowie bei PDAs gegeben. Für Mobilgeräte der 2.5-ten und 3-ten Generation, z.B. Geräte für die Netze GPRS (general packet radio service), EDGE, UMTS (universal mobile telecommunications system) und WCDMA (wideband code-division multiple access) ist es wegen der hohen Übertragungsgeschwindigkeiten realistisch, Anwendungsprogramme über die Luftschnittstelle von einem Dienstanbieter in das Mobilgerät zu laden und/oder zu aktualisieren.

Bei den genannten Mobilgeräten bestehen Probleme beziehungsweise Verbesserungsbedarf in mehrerlei Hinsicht. Erstens soll auch hier ein unautorisierter Zugriff auf Anwendungsprogramme verhindert werden. Es soll also sichergestellt sein, dass nur der berechtigte Benutzer ein Anwendungsprogramm beziehungsweise einzelne gesicherte Funktionen des Anwendungsprogramms aufrufen kann. Zweitens wäre eine Möglichkeit wünschenswert, dem Benutzer eine möglichst genau auf seine Bedürfnisse zugeschnittene Auswahl von Funktionen anzubieten. Drittens soll eine möglichst weitgehende Geräteunabhängigkeit der bereitgestellten Funktionen erreicht werden.
Aus der EP-A 1 107 627 ist ein Mobilgerät bekannt, bei dem das Speichern und Lesen von Konfigurationsdaten sowie das Ausführen von Anwendungsprogrammen beschrieben ist, wobei die Anwendungsprogramme in einem Gerätespeicher abgelegt sind. Der Benutzer hat jedoch keine Information darüber, welche Anwendungsprogramme oder Einzelfunktionen im Mobilfunkgerät verfügbar sind.

Die Erfindung hat die Aufgabe, die genannten Probleme ganz oder teilweise zu lösen. Insbesondere sollen durch die Erfindung die Sicherheit und der Schutz gegen unberechtigte Zugriffe auf Anwendungsprogramme in einem Mobilgerät erhöht werden. In bevorzugten Ausgestaltungen soll die Erfindung ferner hohen Komfort für den Benutzer bereitstellen und kostengünstig verwirklicht werden können.

Erfindungsgemäß wird diese Aufgabe ganz oder zum Teil gelöst durch ein Verfahren mit den Merkmalen des Anspruchs 1, ein Mobilgerät mit den Merkmalen des Anspruchs 7 und ein Benutzermodul mit den Merkmalen des Anspruchs 9. Die abhängigen Ansprüche betreffen bevorzugte Ausgestaltungen der Erfindung.

Die Erfindung geht von der Grundidee aus, durch eine geeignete Speicherung der Konfigurationsdaten die oben genannten Sicherheitsanforderungen zu erfüllen.

Die Erfindung beruht auf der Grundidee, durch die Konfigurationsdaten die Verfügbarkeit des gesamten Anwendungsprogramms oder einzelner Funktionen des Anwendungsprogramms anzugeben. Die Konfigurationsdaten werden im Benutzermodul gespeichert, während das Anwendungsprogramm im Mobilgerät vorliegt. Das Anwendungsprogramm wird nur dann bzw. nur in dem Umfang ausgeführt, wie dies durch die Konfigurationsdaten angegeben ist.

Die erfindungsgemäße Lehre bietet Schutz gegen eine unautorisierte Ausführung des Anwendungsprogramms bzw. einzelner Programmfunktionen, da neben dem Mobilgerät stets auch das Benutzermodul mit den entsprechenden, die Programmausführung zulassenden Konfigurationsdaten erforderlich ist. Ferner schafft die Erfindung die technischen Grundlagen, um eine genau auf die Bedürfnisse des Benutzers zugeschnittene Programmkonfiguration bereitzustellen. Dies ist insbesondere dann von Bedeutung, wenn für die Programmbenutzung ein von der zur Verfügung gestellten Funktionalität abhängiges Entgelt zu entrichten ist, wie dies beispielsweise bei ASP-Angeboten (ASP = application service providing) der Fall ist. Da erfindungsgemäß die Konfigurationsdaten im Benutzermodul gespeichert sind, kann der Benutzer durch einfaches Umstecken des Benutzermoduls die von ihm gewünschte Konfiguration bei beliebigen kompatiblen Mobilgeräten einstellen.

Unter dem hier verwendeten Begriff "Anwendungsprogramm" sind insbesondere Programme zu verstehen, die Datenverarbeitungsfunktionen hinsichtlich der oben genannten Nutzdaten ausführen. Wenn es sich bei dem Mobilgerät um ein Gerät mit Telekommunikationsfunktionen handelt, sind die Anwendungsprogramme vorzugsweise unabhängig von diesen Telekommunikationsfunktionen oder zumindest auch für andere Zwecke nutzbar. Beispiele typischer Anwendungsprogramme sind Terminplaner, Adressbücher, Texteditoren, Tabellenkalkulationsprogramme, Datenbanken, Diktataufzeichnungsprogramme und so weiter. Auch Programme, die nur Benutzeroberflächen für die oben genannten oder ähnliche Anwendungen bereitstellen (während die eigentlichen Datenverarbeitungsvorgänge durch den Server eines ASP-Anbieters ausgeführt werden), sollen im hier verwendeten Sinne als Anwendungsprogramme aufgefasst werden. In manchen Ausgestaltungen sind auch Browser und Viewer zur formatierten Anzeige von Dokumenten als Anwendungsprogramme vorgesehen. Anwendungsprogramme können aber auch Abspielprogramme für Multimediainhalte, beispielsweise im MP3-Format sein.

Zur weiteren Erhöhung des Schutzes gegen eine unberechtigte Ausführung der Anwendungsprogramme ist vorzugsweise das Auslesen der Konfigurationsdaten durch ein Kennwort und/ oder eine biometrische Überprüfung, z.B. eine Stimm- oder Fingerabdruckanalyse, gesichert. Das Benutzermodul gibt nur dann die Konfigurationsdaten frei und ermöglicht dadurch das Ausführen des entsprechenden Anwendungsprogramms beziehungsweise der entsprechenden Programmfunktion, wenn sich der Benutzer durch das Kennwort und/ oder seine biometrischen Daten hinreichend identifizieren konnte.

Die erfindungsgemäße Funktionalität ist auch bei Mobilgeräten einsetzbar, die ein oder mehrere fest gespeicherte Anwendungsprogramme enthalten. Vorzugsweise dienen die Konfigurationsdaten jedoch auch dazu, das Laden von Anwendungsprogrammen oder zumindest Teilen davon in das Mobilgerät zu steuern. Insbesondere bei Mobilgeräten, die leistungsfähige Funktionen zur drahtlosen Datenübertragung aufweisen, können die Anwendungsprogramme oder die benötigten Programmmodule über die Luftschnittstelle von einem externen Dienstanbieter geladen werden. Diese Möglichkeit ist im Zusammenhang mit ASP-Angeboten besonders vorteilhaft. Der Komfort für den Benutzer wird erheblich gesteigert, wenn er bereits durch die bloße Verwendung des Benutzermoduls auf jedem kompatiblen Mobilgerät ein automatisches Laden der benötigten Anwendungsprogramme entsprechend seiner Konfiguration initiieren kann. Das herstellerunabhängige Laden von Anwendungsprogrammen wird durch die Verwendung von Programmiersprachen unterstützt, die unabhängig von der Rechnerplattform arbeiten, wie dies beispielsweise auf Java® zutrifft.

Besonders vorteilhaft ist eine Verbindung der beiden genannten Aspekte der Erfindung, weil dadurch ein Schutz gegen unberechtigten Zugriff auf die Nutzdaten und ein Schutz gegen die unberechtigte Ausführung von Anwendungsprogrammen erreicht wird.

Das Mobilgerät ist in bevorzugten Ausgestaltungen ein Telekommunikationsgerät, insbesondere ein Mobiltelefon oder ein persönlicher digitaler Assistent (PDA) mit Telefoniefunktionen. Das Benutzermodul ist vorzugsweise ein Teilnehmeridentifikationsmodul (SIM = subscriber identification module), wie es auch zur Einbuchung in ein Telekommunikationsnetz benötigt wird. Insbesondere kann ein Benutzermodul vorgesehen sein, das als sogenanntes trusted device oder tamper resistant device manipulationsgesichert ist, so dass ein Ausspähen der Ver- und Entschlüsselungsfunktionen oder der Schlüsseldaten oder vertraulicher Konfigurationsdaten verhindert wird. Die Verwendung eines Teilnehmeridentifikationsmoduls bietet sich auch dann an, wenn das Mobilgerät keine Telefoniefunktionen aufweist oder das Modul nicht bei einem Telefonieanbieter registriert ist, weil derartige Module in großen Stückzahlen hergestellt werden und dadurch relativ kostengünstig verfügbar sind.

Das Mobilgerät und das Benutzermodul sind vorzugsweise mit Merkmalen weitergebildet, die den oben beschriebenen und/oder in den abhängigen Verfahrensansprüchen genannten Merkmalen entsprechen.

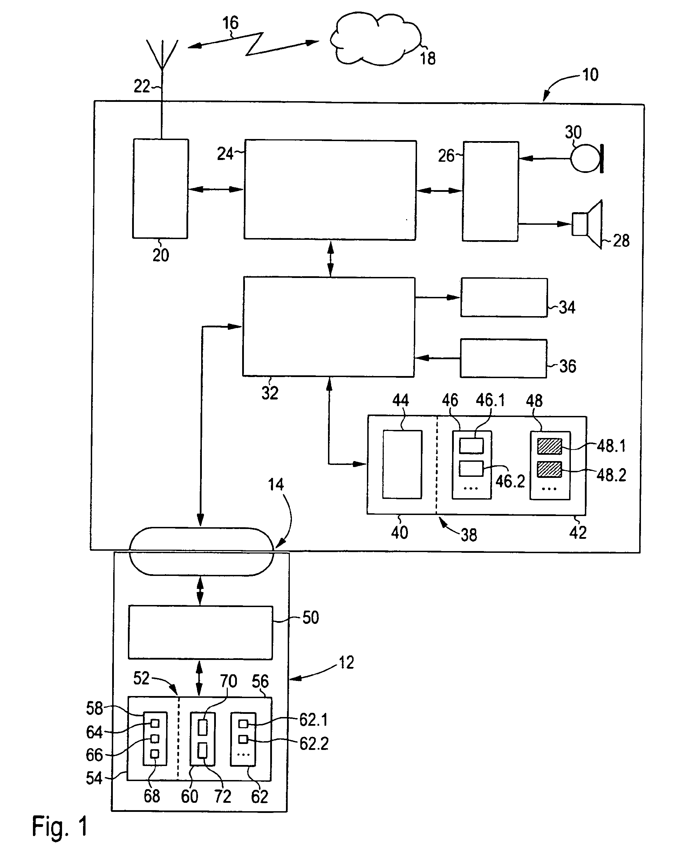

Weitere Merkmale, Vorteile und Aufgaben der Erfindung gehen aus der folgenden genauen Beschreibung eines Ausführungsbeispiels der Erfindung und mehrerer Ausführungsalternativen hervor. Es wird auf die schematische Zeichnung verwiesen, in der Fig. 1 ein Blockdiagramm wesentlicher Funktionseinheiten eines Systems nach dem vorliegend beschriebenen Ausführungsbeispiel der Erfindung zeigt.

In Fig.1 sind ein Mobilgerät 10 und ein Benutzermodul 12 dargestellt, die über eine Schnittstelle 14 miteinander verbunden sind. Das Mobilgerät 10 ist im vorliegenden Ausführungsbeispiel als leistungsfähiges Mobiltelefon ausgestaltet, das Telekommunikationsfunktionen gemäß den Standards GSM für Telefoniedienste und GPRS für Datenübertragungsdienste bereitstellt. Entsprechend ist das Benutzermodul 12 als SIM-Karte ausgebildet, welche in das Mobiltelefon eingesetzt wird oder fest im Mobiltelefon angeordnet ist. Über eine Luftschnittstelle 16 vermag das Mobilgerät 10 auf ein entsprechendes Telekommunikationsnetz 18 zuzugreifen. In Ausführungsalternativen ist das Mobilgerät 10 nach einem weiterentwickelten Mobilfunkstandard, z.B. UMTS, und/oder als persönlicher digitaler Assistent (PDA), der auch multimediafähig sein kann, ausgestaltet.

In an sich bekannter Weise weist das Mobilgerät 10 einen Hochfrequenzteil 20 auf, der Funkwellen über eine Antenne 22 sendet und empfängt. Ein digitaler Signalprozessor (DSP) 24 dient zur Verarbeitung des Sende- bzw. Empfangssignals. Ferner verarbeitet der digitale Signalprozessor 24 Niederfrequenzsignale, die über einen Niederfrequenzteil 26 an einen Lautsprecher 28 geleitet werden beziehungsweise von einem Mikrofon 30 über den Niederfrequenzteil 26 an den digitalen Signalprozessor 24 ausgegeben werden. Eine Prozessoreinheit 32 koordiniert alle im Mobilgerät 10 ablaufenden Vorgänge. Die Prozessoreinheit 32 ist mit der Schnittstelle 14, dem digitalen Signalprozessor 24, einer hier als grafikfähiges LCD-Display ausgestalteten Anzeige 34, einer Tastatur 36 und einem Gerätespeicher 38 verbunden. Der Gerätespeicher 38 kann fest installiert oder abnehmbar, beispielsweise in Form einer Speicherkarte, ausgeführt sein.

Der Gerätespeicher 38 ist durch mehrere Halbleiterchips in unterschiedlichen Speichertechnologien implementiert. In der konzeptionellen Darstellung von Fig. 1 weist der Gerätespeicher 38 einen nur-lesbaren Bereich 40 (z.B. implementiert als maskenprogrammiertes ROM) und einen beschreibbaren Bereich 42, z.B. implementiert als RAM oder EEPROM oder FLASH-Speicher, auf. Der nur-lesbare Bereich 40 des Gerätespeichers 38 enthält insbesondere Betriebsprogramme 44, die von der Prozessoreinheit 32 als grundlegendes Betriebssystem des Mobilgeräts 10 sowie zur Implementierung der Telekommunikationsfunktionen ausgeführt werden. In den beschreibbaren Bereich 42 sind Anwendungsprogramme 46 und Nutzdaten 48 geladen.

Fig.1 zeigt als Beispiel für die Anwendungsprogramme 46 einen Terminplaner 46.1 (mit Adressbuchfunktion) und einen Texteditor 46.2. Als Nutzdaten 48 sind in Fig. 1 eine Termin- und Adressenliste 48.1 für den Terminplaner 46.1 und ein Brief 48.2 für den Texteditor 46.2 dargestellt. Die Anwendungsprogramme 46 werden von der Prozessoreinheit 32 ausgeführt und greifen auf die Nutzdaten 48 zu. Die Nutzdaten 48 sind im Gerätespeicher 38 verschlüsselt abgelegt, was in Fig. 1 durch eine Schraffur angedeutet ist.

Das Benutzermodul 12 ist als Teilnehmeridentifikationsmodul (SIM) für das Telekommunikationsnetz 18 ausgestaltet, und auch die Schnittstelle 14 entspricht mechanisch und elektrisch den für dieses Telekommunikationsnetz 18 vorgesehenen Normen. Das Benutzermodul 12 weist eine als Mikrocontroller ausgestaltete Prozessoreinheit 50 auf, die auf einem einzigen Chip mit einem Modulspeicher 52 integriert ist. Der Modulspeicher 52 ist durch unterschiedliche Speichertechnologien in einen nur-lesbaren Bereich 54 und einen beschreibbaren Bereich 56 unterteilt.

Der Modulspeicher 52 enthält Steuerprogramme und Daten, die erstens grundlegende Betriebssystemfunktionen für das Benutzermodul 12 bereitstellen und zweitens das Einbuchen und den Telekommunikationsbetrieb des Mobilgeräts 10 im Hinblick auf das Telekommunikationsnetz 18 ermöglichen. Aus Gründen der Übersichtlichkeit sind diese Steuerprogramme und Daten in Fig. 1 nicht gesondert dargestellt. Kryptographische Funktionen 58 sind im nur-lesbaren Bereich 54 des Modulspeichers 52 sowie Schlüsseldaten 60 und Konfigurationsdaten 62 im beschreibbaren Bereich 56 abgelegt.

Die kryptographischen Funktionen 58 enthalten eine Verschlüsselungsfunktion 64, eine Entschlüsselungsfunktion 66 und eine Schlüsselerzeugungsfunktion 68. Die Schlüsseldaten 60 teilen sich in einen öffentlichen Schlüssel 70 und einen privaten Schlüssel 72 auf. Die Konfigurationsdaten 62 weisen für jedes im Mobilgerät 10 vorgesehene Anwendungsprogramm 46 einen entsprechenden Konfigurationsdatensatz auf, nämlich im hier beschriebenen Ausführungsbeispiel einen Konfigurationsdatensatz 62.1 für den Terminplaner 46.1 sowie einen Konfigurationsdatensatz 62.2 für den Texteditor 46.2.

Im Betrieb stellt das in Fig. 1 gezeigte System die üblichen Telekommunikationsfunktionen entsprechend den jeweiligen Standards, im vorliegenden Fall GSM und GPRS, bereit. Zusätzlich kann der Benutzer die Anwendungsprogramme 46 aufrufen und mit diesen die Nutzdaten 48 oder andere Daten bearbeiten.

Zum Bereitstellen der Anwendungsprogramme 46 greift das Mobilgerät 10 beim Einschalten oder spätestens, wenn der Benutzer ein Anwendungsprogramm 46 starten möchte, auf die Konfigurationsdaten 62 im Benutzermodul 12 zu. Dieser Zugriff erfolgt über die Prozessoreinheit 50 des Benutzermoduls 12, die ihrerseits zunächst eine Kennworteingabe anfordert, bevor sie den Zugriff freigibt. Die Kennwortanforderung wird auf der Anzeige 34 des Mobilgeräts 10 angezeigt, und der Benutzer gibt das entsprechende Kennwort über die Tastatur 36 ein. Die Korrektheit des Kennworts wird durch die Prozessoreinheit 50 überprüft.

Hat der Benutzer das korrekte Kennwort eingegeben, so überträgt das Benutzermodul 12 die angeforderten Konfigurationsdaten 62 (entweder alle Konfigurationsdaten 62 oder nur den für das jeweilige Anwendungsprogramm 46.1, 46.2 vorgesehenen Datensatz 62.1, 62.2) an das Mobilgerät 10. Die Prozessoreinheit 32 überprüft nun, ob gemäß den übertragenen Konfigurationsdaten 62, 62.1, 62.2 die Ausführung von Anwendungsprogrammen 46 oder des konkret angeforderten Anwendungsprogramms 46.1, 46.2 zulässig ist. Ist dies der Fall, so wird die Programmausführung freigegeben.

Wenn sich das gewünschte Anwendungsprogramm 46.1, 46.2 bereits im Gerätespeicher 38 befindet, kann das Programm ohne weiteres gestartet werden. Andernfalls wird das benötigte Programm oder Nutzdaten, die ggf. kostenplichtig sein können, über die Luftschnittstelle 16 und das Telekommunikationsnetz 18 von einem Server eines ASP-Anbieters in den Gerätespeicher 38 geladen. Auch dieser Download-Vorgang muss durch das Benutzermodul 12 autorisiert werden, das hierbei als sogenannter gatekeeper arbeitet. Selbst wenn das gewünschte Anwendungsprogramm 46.1, 46.2 bereits im Gerätespeicher 38 enthalten ist, kann dennoch eine Anfrage über die Luftschnittstelle 16 beim ASP-Dienstanbieter erfolgen, um erstens Abrechnungsdaten zu übertragen und zweitens gegebenenfalls vorliegende Programmaktualisierungen in das Mobilgerät 10 zu übernehmen.

Die Konfigurationsdaten 62 betreffen im hier beschriebenen Ausführungsbeispiel nicht nur die grundlegenden Benutzerberechtigungen, sondern auch bevorzugte Einstellungen der Anwendungsprogramme 46, beispielsweise voreingestellte Dateipfade, Spracheinstellungen, Menükonfigurationen und sonstige Benutzerpräferenzen. Diese Einstellungen werden den aufgerufenen Anwendungsprogramm 46 zugänglich gemacht, so dass der Benutzer immer mit der von ihm gewünschten Programmkonfiguration arbeitet. Dies gilt auch dann, wenn der Benutzer sein Benutzermodul 12 mit einem neuen oder anderen Mobilgerät 10 verbindet.

Bei hinreichender Standardisierung der Anwendungsprogrammierungsschnittstellen (APIs = application programming interfaces), wie sie beispielsweise durch Verwendung der Programmiersprache Java® mittelfristig zu erwarten ist, kann damit ein ASP-Anbieter für jeden Benutzer maßgeschneiderte und von dem benutzten Mobilgerät 10 unabhängige Anwendungsprogrammdienste anbieten. Überdies wird ein hohes Sicherheitsniveau erreicht, da sämtliche Anwendungsprogramme 46 nur bei Vorhandensein des Benutzermoduls 12 und nach Kennworteingabe aufrufbar sind. Um einen Missbrauch bei einem Diebstahl des Mobilgeräts 10 in eingeschaltetem Zustand (nach der Kennworteingabe durch den Benutzer) zu verhindern, kann vorgesehen sein, dass nach einer Unterbrechung der Benutzeraktivität für eine vorbestimmte Dauer wieder eine Kennworteingabe angefordert wird, wie dies beispielsweise bei Bildschirmschonern für stationäre Bürocomputer bereits an sich bekannt ist.

In dem bisher beschriebenen Ausführungsbeispiel wurde als kleinste Einheit für den Autorisierungsmechanismus und gegebenenfalls den Ladevorgang über die Luftschnittstelle 16 ein Anwendungsprogramm 46 angesehen. Abhängig von der eingesetzten Programmiertechnologie kann jedoch auch ein feineres Granularitätsniveau verwendet werden. Es können sich also die Konfigurationsdaten 62 beispielsweise auf die Berechtigung des Benutzers zum Ausführen einzelner Programmfunktionen oder einzelner Programm-Module beziehen, und diese Programmfunktionen oder Programm-Module können bei Bedarf einzeln über die Luftschnittstelle 16 geladen werden. Durch diese Vorgehensweise werden erstens lange Ladezeiten vermieden, und zweitens kann eine noch genauere Einstellung auf die Benutzerpräferenzen erfolgen. Auch bei der Aktualisierung von Anwendungsprogrammen 46 über die Luftschnittstelle 16 werden vorzugsweise nur solche Programm-Module übertragen, die sich gegenüber der bereits im Mobilgerät 10 befindlichen Version tatsächlich verändert haben.

Die von den Anwendungsprogrammen 46 bearbeiteten Nutzdaten 48 sind im Gerätespeicher 38 entweder vollständig oder zumindest teilweise in verschlüsselter Form abgelegt. Beispielsweise kann dem Benutzer ein Dateisystem zur Speicherung der Nutzdaten 48 bereitgestellt werden, bei dem einzelne Ordner oder einzelne Laufwerke wahlweise für eine verschlüsselte oder unverschlüsselte Datenspeicherung eingestellt werden können. Eine ähnliche Funktionalität für stationäre Bürocomputer ohne Einsatz eines Benutzermoduls ist bereits durch das Produkt PGPdisk® des Herstellers Network Associates, Inc., bekannt.

Wenn ein Anwendungsprogramm 46 Nutzdaten 48 in einem zur Verschlüsselung vorgesehenen Bereich des Dateisystems speichern möchte, werden diese Daten von der Prozessoreinheit 32 über die Schnittstelle 14 an das Benutzermodul 12 übertragen. Die Prozessoreinheit 50 des Benutzermoduls 12 führt die Verschlüsselungsfunktion 64 aus, wobei der in den Schlüsseldaten 60 enthaltene öffentliche Schlüssel 70 herangezogen wird. Die verschlüsselten Nutzdaten 48 werden über die Schnittstelle 14 und die Prozessoreinheit 32 in den Gerätespeicher 38 geschrieben.

Der Zugriff auf verschlüsselt abgelegte Nutzdaten 48 erfolgt entsprechend. Auch hier führt die Prozessoreinheit 50 des Benutzermoduls 12 die eigentliche Entschlüsselung unter Verwendung der Entschlüsselungsfunktion 66 und des privaten Schlüssels 72 aus. Vorab fordert die Prozessoreinheit 50 jedoch eine Kennworteingabe vom Benutzer an. Erst wenn das korrekte Kennwort (passphrase) auf der Tastatur 36 eingegeben wurde (oder eine sonstige biometrische Identifizierung des Benutzers korrekt durchgeführt wurde), wird der Entschlüsselungsvorgang freigegeben.

Im hier beschriebenen Ausführungsbeispiel wird die Ver- und Entschlüsselung nach einem asymmetrischen RSA-Verfahren durchgeführt. In Ausführungsalternativen sind dagegen andere asymmetrische oder symmetrische Ver- und Entschlüsselungsverfahren oder Mischformen davon, z.B. symmetrische Verschlüsselung unter Verwendung eines asymmetrisch verschlüsselten Schlüssels, vorgesehen. Bei symmetrischen Verfahren braucht nicht zwischen dem öffentlichen Schlüssel 70 und dem privaten Schlüssel 72 unterschieden zu werden.

Insgesamt wird durch die hier vorgeschlagene Technik sichergestellt, dass die verschlüsselten Nutzdaten 48 nur dann ausgelesen bzw. verwendet werden können, wenn das Benutzermodul 12 des berechtigten Benutzers an die Schnittstelle 14 angeschlossen ist und der Benutzer sich, z.B. mittels der passphrase, korrekt identifiziert hat.

Im vorliegenden Ausführungsbeispiel wird der gesamte Ver- und Entschlüsselungsprozess von der Prozessoreinheit 50 des Benutzermoduls 12 durchgeführt, wobei die Schlüsseldaten 60 niemals das Benutzermodul 12 verlassen. Es sind jedoch auch Ausführungsalternativen vorgesehen, bei denen die Verschlüsselungsfunktion 64 und der öffentliche Schlüssel 70, der nicht geheimgehalten zu werden braucht, an das Mobilgerät 10 übergeben werden, so dass der Verschlüsselungsvorgang durch die in der Regel leistungsfähigere Prozessoreinheit 32 des Mobilgeräts 10 durchgeführt werden kann. Für den Entschlüsselungsvorgang kann in manchen Ausführungsalternativen ebenfalls die Prozessoreinheit 32 herangezogen werden, solange dadurch die Sicherheit des privaten Schlüssels 72 nicht kompromittiert wird.

Zur Erzeugung der Schlüsseldaten 60 wird im vorliegenden Ausführungsbeispiel die Schlüsselerzeugungsfunktion 68 verwendet, die ebenfalls von der Prozessoreinheit 50 des Benutzermoduls 12 ausgeführt wird. Auf an sich bekannte Weise berechnet dieses Programm ein Paar aus öffentlichem Schlüssel 70 und privatem Schlüssel 72. Durch diese Maßnahme wird besonders hohe Datensicherheit gewährleistet, weil der private Schlüssel 72 auch bei der Schlüsselerzeugung das Benutzermodul 12 nicht verlässt.

Das hier beschriebene Ausführungsbeispiel ist nicht auf einen einzigen verschlüsselten Bereich für die Nutzdaten 48 und nicht auf ein einziges Verschlüsselungsverfahren beschränkt. So kann beispielsweise - entsprechende Legitimierung durch die passphrase vorausgesetzt - ein verschlüsselter Bereich jederzeit deaktiviert und damit frei zugänglich gemacht werden. Auch eine erneute Verschlüsselung mit demselben oder einem anderen Benutzermodul 12 ist möglich. Es können auch mehrere verschlüsselte Bereiche, gegebenenfalls mit unterschiedlichen Schlüsselpaaren und/oder in verschiedenen Größen, angelegt und verwaltet werden.

Insbesondere bei der vorliegenden Ausgestaltung, die einen ASP-Anbieter vorsieht, können die verschlüsselten Nutzdaten 48 zusätzlich zur Speicherung im Mobilgerät 10 auch über die Luftschnittstelle 16 zu einem Server des ASP-Anbieters übertragen und dort gespeichert werden. Eine Synchronisierung der beiderseitig gespeicherten Nutzdaten 48 kann bei jedem Schreibzugriff eines Anwendungsprogramms 46 oder beim Beenden einer Benutzersitzung oder auf ausdrückliche Anforderung des Benutzers erfolgen. Der Benutzer hat dann einerseits schnellen Zugriff auf die lokal gespeicherten Nutzdaten 48 und ist andererseits von dem verwendeten Mobilgerät 10 unabhängig, weil er die beim ASP-Anbieter gespeicherten Nutzdaten 48 auch mit jedem anderen Mobilgerät abrufen kann.

Ferner kann in manchen Ausgestaltungen vorgesehen sein, eine Schlüsselkomponente beim Netzbetreiber oder dem ASP-Anbieter zu belassen. Nach erfolgreicher Einbuchung des Mobilgeräts 10 in das Telekommunikationsnetz 18 wird diese Schlüsselkomponente über die Luftschnittstelle 16 übertragen, so dass der Netzbetreiber oder ASP-Anbieter die Kontrolle über bestimmte im Mobilgerät 10 gespeicherte Nutzdaten 48 mit dem Benutzer teilt.

## Patentansprüche

1. Verfahren zum Speichern von und Zugreifen auf Konfigurationsdaten (62) sowie zum Ausführen mindestens eines Anwendungsprogramms (46) in einem Mobilgerät (10), insbesondere einem Mobiltelefon oder einem persönlichen digitalen Assistenten, das einen Gerätespeicher (38) für das Anwendungsprogramm (46) aufweist und das über eine Schnittstelle (14) mit einem einen Modulspeicher (52) aufweisenden Benutzermodul (12) verbunden ist,
**dadurch gekennzeichnet, dass**
- die Konfigurationsdaten (62) zumindest auch die Verfügbarkeit des Anwendungsprogramms (46) oder einzelner Funktionen davon betreffen, und dass
- die Konfigurationsdaten (62) in dem Modulspeicher (52) gespeichert sind und aus diesem ausgelesen werden, um zu bestimmen, ob bzw. in welchem Umfang das Anwendungsprogramm (46) ausgeführt wird.

2. Verfahren nach Anspruch 1, **dadurch gekennzeichnet, dass** das Auslesen der Konfigurationsdaten (62) aus dem Modulspeicher (52) durch ein Kennwort und/ oder eine biometrische Prüfung geschützt ist.

3. Verfahren nach Anspruch 1 oder Anspruch 2, **dadurch gekennzeichnet, dass** zumindest Teile des Anwendungsprogramms (46) entsprechend den Konfigurationsdaten (62) in den Gerätespeicher (38) geladen werden.

4. Verfahren nach einem der Ansprüche 1 bis 3, **dadurch gekennzeichnet, dass** das Mobilgerät (10) ein auch für Telekommunikationsfunktionen eingerichtetes Gerät ist.

5. Verfahren nach den Ansprüchen 3 und 4, **dadurch gekennzeichnet, dass** die Übertragung von zumindest Teilen des Anwendungsprogramms (46) in den Gerätespeicher (38) unter Verwendung mindestens einer der Telekommunikationsfunktionen des Mobilgeräts (10) erfolgt.

6. Verfahren nach einem der Ansprüche 1 bis 5, **dadurch gekennzeichnet, dass** das Benutzermodul (12) ein auch zur Einbuchung in ein Telekommunikationsnetz (18) vorgesehenes Teilnehmeridentifikationsmodul ist.

7. Mobilgerät (10), insbesondere Mobiltelefon oder persönlicher digitaler Assistent, das einen Gerätespeicher (38) für ein Anwendungsprogramm (46) aufweist und das über eine Schnittstelle (14) mit einem einen Modulspeicher (52) aufweisenden Benutzermodul (12) verbunden ist,
**dadurch gekennzeichnet, dass**
- die Schnittstelle (14) ausgelegt ist, um Konfigurationsdaten (62) aus dem Modulspeicher (52) auszulesen, wobei die Konfigurationsdaten zumindest auch die Verfügbarkeit des Anwendungsprogramms (46) oder einzelner Funktionen davon betreffen, und dass
- das Mobilgerät (10) dazu eingerichtet ist, in Abhängigkeit von den aus dem Modulspeicher (52) ausgelesenen Konfigurationsdaten (62) zu bestimmen, ob bzw. in welchem Umfang das Anwendungsprogramm (46) ausgeführt wird.

8. Mobilgerät (10) nach Anspruch 7, das dazu eingerichtet ist, in Zusammenwirken mit einem Benutzermodul (12) ein Verfahren nach einem der Ansprüche 1 bis 7 auszuführen.

9. Benutzermodul (12), insbesondere Teilnehmeridentifikationsmodul für ein Telekommunikationsnetz (18), das dazu eingerichtet ist, in Zusammenwirken mit einem Mobilgerät (10) nach Anspruch 7 ein Verfahren nach einem der Ansprüche 1 bis 6 auszuführen.

## Claims

1. A method for storing and accessing configuration data (62) and for executing at least one application program (46) in a mobile device (10), in particular a mobile telephone or a personal digital assistant, having a device memory (38) for the application program (46) and being connected via an interface (14) to a user module (12) having a module memory (52),
**characterized in that**
- the configuration data (62) relate to at least also the availability of the application program (46) or of individual functions thereof, and
- the configuration data (62) are stored in the module memory (52) and read out therefrom in order to determine whether, or to what extent, the application program (46) will be executed.

2. A method according to claim 1, **characterized in that** the read-out of the configuration data (62) from the module memory (52) is protected by a password and/or a biometric check.

3. A method according to claim 1 or claim 2, **characterized in that** at least parts of the application program (46) are loaded into the device memory (38) in accordance with the configuration data (62).

4. A method according to any of claims 1 to 3, **characterized in that** the mobile device (10) is a device also set up for telecommunications functions.

5. A method according to claims 3 and 4, **characterized in that** the transfer of at least parts of the application program (46) into the device memory (38) is effected using at least one of the telecommunications functions of the mobile device (10).

6. A method according to any of claims 1 to 5, **characterized in that** the user module (12) is a subscriber identity module also provided for logging into a telecommunications network (18).

7. A mobile device (10), in particular a mobile telephone or a personal digital assistant, having a device memory (38) for an application program (46) and being connected via an interface (14) to a user module (12) having a module memory (52),
**characterized in that**
- the interface (14) is designed for reading out configuration data (62) from the module memory (52), the configuration data relating to at least also the availability of the application program (46) or of individual functions thereof, and
- the mobile device (10) is set up to determine, in dependence on the configuration data (62) read out from the module memory (52), whether, or to what extent, the application program (46) will be executed.

8. A mobile device (10) according to claim 7 which is set up to execute, in cooperation with a user module (12), a method according to any of claims 1 to 7.

9. A user module (12), in particular a subscriber identity module for a telecommunications network (18), which is set up to execute, in cooperation with a mobile device (10) according to claim 7, a method according to any of claims 1 to 6.

## Revendications

1. Procédé pour mémoriser et accéder à des données de configuration (62), ainsi que pour exécuter au moins un programme d'application (46) dans un dispositif mobile (10), notamment un téléphone mobile ou un assistant numérique personnel, qui est pourvu d'une mémoire de dispositif (38) pour le programme d'application (46) et qui est relié via une interface (14) à un module d'utilisateur (12) pourvu d'une mémoire de module (52), **caractérisé en ce que**
- les données de configuration (62) concernent au moins également la disponibilité du programme d'application (46) ou de chaque fonction de celui-ci, et **en ce que**
- les données de configuration (62) sont mémorisées dans la mémoire de module (52) et lues à partir de celle-ci, afin de déterminer si ou dans quelle mesure le programme d'application (46) est exécuté.

2. Procédé selon la revendication 1, **caractérisé en ce que** la lecture des données de configuration (62) à partir de la mémoire de module (52) est protégée par un mot de passe et/ou une vérification biométrique.

3. Procédé selon la revendication 1 ou 2, **caractérisé en ce qu'**au moins des parties du programme d'application (46) sont chargées dans la mémoire de dispositif (38) conformément aux données de configuration (62).

4. Procédé selon l'une quelconque des revendications 1 à 3, **caractérisé en ce que** le dispositif mobile (10) est un dispositif également équipé pour des fonctions de télécommunication.

5. Procédé selon les revendications 3 et 4, **caractérisé en ce que** le transfert d'au moins des parties du programme d'application (46) dans la mémoire de dispositif (38) est réalisé par l'utilisation d'au moins une des fonctions de télécommunication du dispositif mobile (10).

6. Procédé selon l'une quelconque des revendications 1 à 5, **caractérisé en ce que** le module d'utilisateur (12) est un module d'identification d'abonné prévu également pour l'abonnement à un réseau de télécommunication (18).

7. Dispositif mobile (10), notamment téléphone mobile ou assistant numérique personnel, qui est pourvu d'une mémoire de dispositif (38) pour un programme d'application (46) et qui est relié via une interface (14) à un module d'utilisateur (12) pourvu d'une mémoire de module (52), **caractérisé en ce que**
- l'interface (14) est conçue pour lire des données de configuration (62) à partir de la mémoire de module (52), les données de configuration concernant au moins également la disponibilité du programme d'application (46) ou de chaque fonction de celui-ci, et **en ce que**
- le dispositif mobile (10) est en outre équipé pour déterminer, en fonction des données de configuration (62) lues à partir de la mémoire de module (52), si ou dans quelle mesure le programme d'application (46) est exécuté.

8. Dispositif mobile (10) selon la revendication 7, qui est en outre équipé pour exécuter un procédé selon l'une quelconque des revendications 1 à 7 en collaboration avec un module d'utilisateur (12).

9. Module d'utilisateur (12), notamment module d'identification d'abonné pour un réseau de télécommunication (18), qui est en outre équipé pour exécuter un procédé selon l'une quelconque des revendications 1 à 6 en collaboration avec un dispositif mobile (10) selon la revendication 7.
